# EUROPEAN PATENT APPLICATION

(11) **EP 1 924 053 A1**
(43) Date of publication of application: **21.05.2008**
(21) Application number: 06291780.2
(22) Date of filing: 16.11.2006
(51) Int. Cl.: H04L 29/08

(54) **An RSS enabled personal token**

(71) Applicant: Axalto S.A., 92190 Meudon (FR)
(72) Inventor: Contamin, Bruno, c/o Axalto S.A. IPD, 92190 Meudon (FR)
(74) Representative: Jacquot, Ludovic R. G.

(57) **Abstract**

The invention relates to a system comprising a mobile phone assembly made of a mobile phone and a personal token, comprising an aggregator (102), and comprising an application (103) running on the mobile phone assembly, the aggregator (102) being able to get acquainted of an update to a web site and to inform the application (103) of such update, the application (103) being further able to pick up end-user choices as to web site updates the end-user intends to be informed of, characterized in that the application (103) is stored and run on the personal token.

## Description

The invention relates to personal tokens used for authenticating a user when such user accesses to a limited or a private resources equipment such as a mobile telecommunication network, a remote server storing secret data or even a protected area with limited physical access thereto.

The mostly known device of this type is the IC card such as for example a SIM card (Subscriber Identification Module) or a credit card, but it can also be a USB key, a mass memory card, or any kind of token carrying some necessary credentials.

Such tokens are typically compliant with international standard ISO7816.

Apart from aspects related to personal tokens, RSS (Really Simple Syndication or Rich Site Summary) will be described hereafter, which is a technology for publishing the often changing information of a web site and for letting other web sites syndicate this information. More precisely, RSS is an XML based protocol describing changes or updated information published through a web site or describing elements of information published in a web site that can be syndicated to another web site. It implements means of description and publication of simple information, mainly text based, and means of subscribing to a source of information, often called RSS feed. The subscription to a feed is done through the usage of the "cloud" element of the protocol, which describes the procedure for the client application in order to receive a notification from the web site when the RSS feed is updated. The specification of this protocol can be found at http://blogs.law.harvard.edu/tech/rss.

US20060155698 gives a good and still up to date description of what is RSS technology, what are the use of this technology and the role of a content aggregator.

The prior art includes also applications hosted on a mobile platform, able to receive RSS or RSS like notification. But these applications are not supported by all mobile in the market, and require most often to be downloaded to the mobile and use a specific communication channel.

The patent application US20060155698 also describes a system that sends alerts or notification to an end users' mobile phone when an RSS feed have been updated, and that can also send the content of the feed, the bearer of the information being text based systems, SMS or voice messages typically using a wireless communication network. According to this prior art, the client can also reply to the notification in order to get the information content. This prior art gives a simple solution for the user to get some information from a selected feed from his mobile, but still a lot of functionalities usually available from a client-side news aggregator are not available as we see below.

According to the patent application US20060155698, the user has no other solution than choose the feeds generating the alerts from a web interface. The present invention describes a solution that let the user choose from which feeds he wants to receive alerts and how often, by choosing one in a list presented to him or by entering the name of the feed thanks to the interface of his mobile device. This is possible even if this mobile device do not provide a web access. This solution also let the user read the feed, even if no alert has been received, by choosing it in an interactive menu displayed on his mobile.

Also, very often, the feed is composed of many items, and it is not possible to forward them in a single SMS. It is also difficult to let the user read everyone of them in a single text message, given the limitation of the size of a message that can be read with a mobile interface. The present application let the user select the very item he wants to read, and therefore solves this issue.

The current invention does not require any change in the mobile, and can work with the most basic phones without any change in the phone thanks to the fact that it relies on an application hosted on the personal token of the user that is able to interact with the user using the mobile interface thanks to commands supported by most mobile phones on the market today.

An RSS application having such features is currently considered as a huge amount of software and therefore dedicated to powerful equipment, such as Personal Computers and sometimes mobile phones. It however appeared in the frame of the present invention that some core functions of a usual RSS application can be stored and run in a smart card and more generally in a personal token, with around the same results as though they were run on a PC or a mobile phone. Many benefits appear then for the end-user, who can then have his subscriptions to a special list of feeds that are stored in his personal token, and which are thereby portable from one mobile to another. The operator also benefits from the fact that the RSS application is stored and run in the token, because he can sell such RSS application at the step of selling the personal token, or sell it as a download onto the personal in the usual way a token is downloaded with applications while on the field.

The advantage of using a smart card based application is that it is independent from the mobile device, and easier to deploy than a mobile device based application. This way, the operator can sell the application, that lets the user reed the RSS feeds, together with the subscription to the voice access to the mobile network.

An RSS publication contains most often an URL that links to the source of information, so that the user can easily access to the original web site publishing the RSS feed. This link is important as the owner or publisher of the RSS document very often requires this link to be systematically published together with the document itself. Very often, this becomes a legal obligation (CF google terms of use http://news.google.com/intl/en us/terms_google news.html). This link could be transmitted in a text message together with a feed content, but then, when the text message is transmitted in an SMS, the user faces some difficulties for easily extracting this link, and use it in a web browser. This difficulty can be a barrier for publishing content available at the condition that the link is published together with it. The present invention solves this issue, since the smart card application gives the option to the user to start browsing the associated link when the feed item is read.

The above explained purposes are achieved by way of the invention as recited in the appended claims.

Other purposes, benefits and aspects of the invention will appear through the following description, which is made in reference to the appended figures, among which :
- Figure 1 depicts a system according to a preferred embodiment of the invention,
- Figures 2, 3 and 4 depict respective series of user actuations onto a mobile phone assembly according to a preferred embodiment of the invention.

The preferred embodiment is based on an application, running on a smart card connected to the mobile device, and being able to communicate with an RSS aggregator application, that can be hosted on a distant server, through a wireless data link. In a preferred embodiment of this invention, the smart card is the User Identity Module (also known as SIM or USIM), and can communicate with the said server with data SMS. The invention gives a solution to implement the functionalities of a RSS feeds reader thanks to this smart card application and the server application.

In a preferred embodiment, the smart card application is using the SIM Toolkit Commands in order to display information to the user and let him make choices and provide some input, but this implementation is not restrictive, and we give the example of the Smart Card Web Server as an other way to implement the user interface.

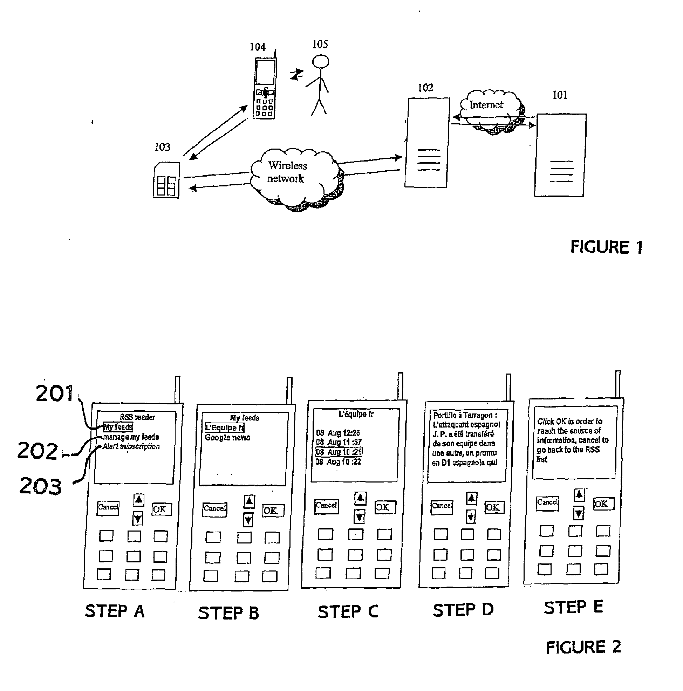

Figure 1 depicts the interactions between the elements of the invention, where the aggregator application 102 can get data from the web sites hosting the RSS documents 101, and thus get the content and check for changes in these documents. The aggregator can also receive an alert from the web site thanks to the mechanism described by the cloud element of the RSS protocol. The smart card application 103 can send some request to the aggregator 102, for example through SMS coded in a way specific to the request. The request can be for example a subscription to a defined RSS feed, or a request for viewing the content of a specified RSS feed. The aggregator 102 has the ability to reply to this request by sending his reply formatted in a way understood by the smart card application, either by providing the content of a feed, either by sending an acknowledge that a subscription to a feed is well performed, either by providing a list of available feeds corresponding to the request of the application. The aggregator 102 has also the possibility to push an alert or a notification to the smart card application that a feed has been updated. The aggregator is able to convert this notification to a text message that will be conveyed to the user. This notification can also describe the content of the updated feed. The man of the art knows very well how to implement the link between the card and the aggregator, this link can for example use SMS or BIP protocol, or other TCPIP protocol. The Smart card 103 application has the ability to display messages on the mobile interface 104 seen by the user 105. The smart card can also get some input from the user. The man of the art knows how to implement this, in a preferred embodiment, the protocol described in the ETSI 11.14 is used for this implementation. In another embodiment, the smart card application is using the Smart Card Web Server designed by the Open Mobile Alliance, which specification, named OMA-TS-Smartcard-Web-Server-V1 is available at http://member.openmobilealliance.org/ftp/Public documents/SEC/SCT/Permane nt documents/. The man of the art knows well how a smart card application can generate locally web pages, that are accessed by the user with the mobile interface, and that can display changing information, let the user make choices in a menu or let the user input a string.

The present embodiment allows the end user to manage a list of feeds present in a menu called "my feeds", to add or remove a feed to or from this menu, to read the feeds selected this way, and to subscribe to alerts coming from these feeds. This list is kept in the memory associated to the Smart Card application and contains enough information for each item in order to identify the feed URL and in order to associate it with a short name in a manner it can be easily recognized and selected from a mobile menu.

For example, for each feed listed, the full URL of the feed and the title of the feed can be kept in the part of the memory of the smart card which is associated to the application. In another embodiment, a feed ID could be kept in the part of the memory of the smart card which is associated with the application, in order to spare memory, this ID being shared, recognized, and associated to the real URL in the memory of the aggregator 102.

Figure 2 illustrates a method for displaying the content of a feed in such a way that the user can select the desired feed, read it and use the link associated to it.

When the smart card application is selected at step A, the application presents three options 201, 202, 203 in a select item proactive command formatted according to the ETSI 11.14 specification. The present embodiment implements a sort of RSS reader with a dstk server. First option 201 "my feeds" lets the user access to feed content with a method described here after. Second option 202 "new feed search" gives to the user options in order to add a new feed to the proposed feeds. In this example, the option "my feeds" is chosen by the user as a step B. As a consequence, the application lets the user choose the feed that he wants to access in a new select item, where he has the choice between a feed coming from "l'équipe.fr", a famous French news paper and a feed coming from Google. Once the feed source is chosen, the smart card application 103 sends a request to the aggregator 102 containing the information of the chosen feed. Such request can be for example in the form of an SMS. The aggregator 102 reads the feed, which is in this case composed of several items. At step C, aggregator 102 replies with a listing of items composing the current version of the feed. Such reply is preferably in the form of data encapsulated in an SMS. The application lets the user choose a specific item. In a preferred embodiment, the items are selected according to their date, as it is a way to display them well adapted to the size of the mobile screen, but in another embodiment, the items could be listed according to their title, or a substring of their title.

Once the item is selected by the user, the smart card application 103 sends - at step D- a new request, by SMS, containing the information about the selected item to the aggregator 102, which replies by sending the text content of the item to the smart card application, together with the URL that is associated with the content, encapsulated in an SMS, preferably a single SMS containing all the data. The end-user can read the news, displayed in this example with a "display text" proactive command according to the ETSI 11.14 specification. Then, when the user has read the information, he acknowledges it with the mobile interface as a step E, and as depicted, he is proposed to follow the URL linked to the feed item. When he clicks OK, the application 103 sends a "launch browser" command, as described in the ETSI 11.14 specification, which asks to the mobile phone 104 to display the content of this URL.

In the embodiment just described above, the feed content is not stored in the memory of the card by the smart card application, so that less memory is required in order to make this application work.

In a second embodiment, more suitable for a smart card with larger memory, the selected feeds content can be permanently stored in the card, and updated on a regular base by the aggregator, for example every day. This second embodiment has the advantage that the feed content can be accessed faster as the smart card application do not have to communicate with the aggregator between the selection of the feed at step C and the selection of the item at step D or between the selection of the item at step C and the display of the information. In this second embodiment, aggregator 102 has the information of which feeds have been selected by the user in "my feed" menu, and aggregator 102 checks everyday the content from all selected feeds and transmit it to the smart card application 103 that has the ability to store it in the card, for further user access.

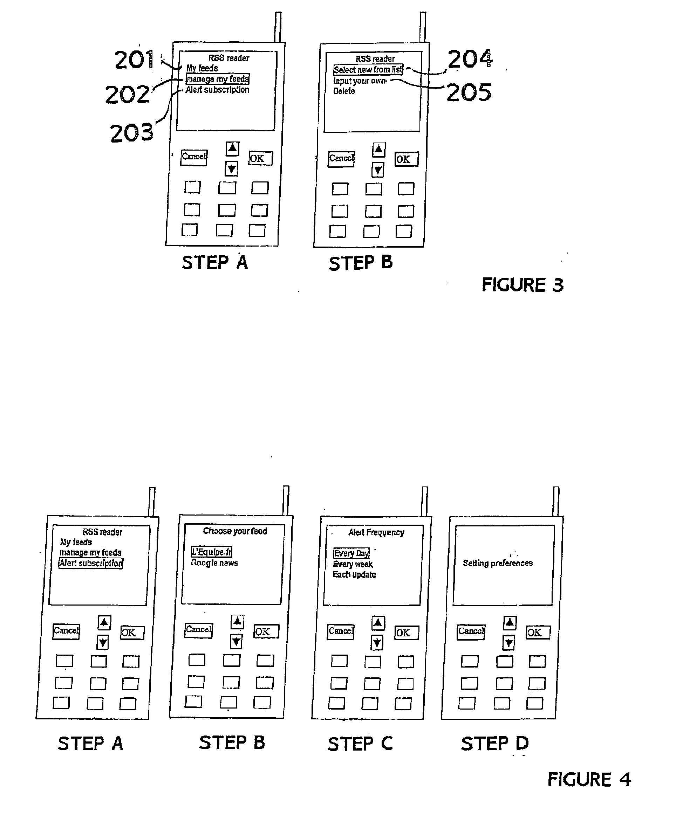

Figure 3 shows how the user can select and add a feed to his "my feeds" menu, or delete one from his menu. At step A', when the user enters the "manage my feeds" menu 202, he is offered the choice either to add a new feed selected from a list, either to input a new feed, either to delete one from his selection.

Smart card application 103 has the ability to keep in its dedicated memory a list of feeds which are most often requested by end-users. This list is stored in a similar manner as the list displayed in "my feeds" menu. When the user selects the "select new from list" option 204, smart card application 103 displays this list of "most often requested" feeds and let the user choose among the feeds kept in the memory by the smart card application. When the user selects an item, the selected feed is added by the smart card application to "my feeds" list.

When the user selects "input your own" option 205 in the menu depicted as step B', smart card application 103 sends a "Get input" command to the mobile 104 in order to let the user enter the full URL on the mobile interface. The user is then asked to enter a short name for this feed, so that the feed can be easily presented in a list on the mobile interface. Then, smart card application 103 sends a request to the aggregator 102, so that the aggregator checks that the URL is valid. If the URL corresponds to a valid RSS feed, then aggregator 102 sends a confirmation message to application 103, which then adds the feed to the "my feeds" list.

When the user selects a "delete" option 205 in the menu depicted as step B', smart card application 103 displays the "my feeds" list to the user and lets him choose the feed to be removed from this list. The application 103 then removes the chosen one.

In an embodiment where the feed content is not fetched in the card but fetched from the aggregator 102 each time, the method mentioned above gives a solution in order to manage the "my feeds" list. In an other embodiment, where the content of the selected feeds is stored in the memory of the Smart card application and updated regularly by the aggregator 102, the aggregator needs to keep an updated copy of the list of feeds selected by the user in the menu "my feeds", and thus an SMS is sent by the application 103 to the aggregator 102 each time the "my feed" list is updated, describing the update, so that the aggregator 102 keeps the knowledge of the content of "my feeds" list.

Figure 4 depicts an example of alert or notification subscription.

When the user enters the alert subscription menu 203 at step B", application 103 displays the same list of feeds as the list given in "my feeds" menu 201. The user can then easily select the feed from which he wants to receive a notification. Once this feed is selected at step C", the application lets the user choose the frequency of the notification. The user may choose to be notified on a regular basis or only when the feed is updated. When the user has selected a frequency, application 103 sends an SMS to the aggregator 102, specifying to set an alert, and containing information to identify the feed and the frequency of the notification.

Note that in this embodiment, the user needs to first add the feed to "my feeds" list before being able to set an alert on the feed. In another embodiment, the user can select the feeds to be set an alert thereon from a different list.

The method used by the system to provide a notification to the end user is specified hereafter: If the user has specified to be notified with a fixed frequency, the aggregator 102 polls regularly the web site 101 for which the alert is set at the defined frequency. Then, if the aggregator 102 detects any change in the feed, the aggregator 102 sends the feed according to a procedure similar to the method depicted in figure 2. The aggregator 102 sends first a message containing the information that the feed has been updated and containing the list of the items contained in the feed. The aggregator is able to convert this notification to a text message that will be conveyed to the user by application 103.

The advantage of sending the list of item composing the feed together with the notification is that an SMS is in most cases big enough in order to contain at the same time the short description of the feed and the list of the items that are composing it, so that in most cases, only one SMS is needed in order to send all these information together. So, this is an optimization of the available bandwidth. When the smart card application 103 receives this message, it first displays a text specifying that the feed has been updated. If the user clicks OK, then the smart card application 103 displays the list of items available in the feed (step C). When the user has selected an item, the smart card application 103 requests the download of the content to the aggregator 102, which sends the content description in one or several SMS (step D). The application 103 then displays the text associated to this item. Then, when the user clicks on OK, the application proposes to follow the URL associated to the feed, and if chosen by the user displays the website specified in the URL (step E).

In another embodiment, the full feed content is downloaded all at once, including all the items, which may seem faster to the end user but may appear as a waste of bandwidth if the user do not wish to receive all the feed, and also require more application memory.

In the case a user cannot be reached because of his mobile being switched off at the moment the notification is given, the man of the art knows well how the aggregator 102 can receive a notification and know that the SMS has not been received, and how to implement a retry mechanism, so that more SMS are sent until the user is reached.

In the case that a same aggregator application is used by a big number of people, each setting a big number of alerts, the man of the art knows how to organize a data base containing tables, which contain the information about all the users and tables, which contain information about all the websites and the notification schedule, and the man of the art knows how to optimize the polling of the websites according to this data base, so that, if two different users require to be notified from the update of the same web site at the same time, only one polling of the web site is done by the aggregator, which is able to generate a notification for each user.

## Claims

1. A system comprising a mobile phone assembly made of a mobile phone and a personal token, comprising an aggregator (102), and comprising an application (103) running on the mobile phone assembly, the aggregator (102) being able to get acquainted of an update to a web site and to inform the application (103) of such update, the application (103) being further able to pick up end-user choices as to web site updates the end-user intends to be informed of, **characterized in that** the application (103) is stored and run on the personal token.

2. The system according to claim 1, **characterized in that** the application (103) proposes to the end-user a list of most usually selected sites by usual end-users.

3. The system according to claim 1 or claim 2, **characterized in that** the update information is sent to the application (103) without necessity of user actuation.

4. The system according to claim 3, **characterized in that** the update information as sent without any user actuation comprises a link which can be actuated by the user so as to get more information on the update.

5. The system according to anyone of the preceding claims, **characterized in that** the application (103) allows the end-user to program the aggregator (102) into interrogating the website according to a specific frequency as chosen by the end-user and into notifying the application (103) when such interrogating reveals the website has been updated.

6. The system according to anyone of the preceding claims, **characterized in that** the application (103) stored a list of feeds each corresponding to an associated website to be interrogated as to possible update of such website, and the user is given the ability to actuate such feed in the said list for such interrogating.

7. The system according to the preceding claim, **characterized in that** the application (103) is further programmed for encapsulating upon actuation of a feed a corresponding request for interrogation of a website in one or several SMS.

8. The system according to the preceding claim, **characterized in that** the application (103) is programmed for encapsulating the request into a single SMS.

9. The system according to anyone of the preceding claims, **characterized in that** the aggregator (102) sends the update information to the application (103) inside at least one SMS.

10. The system according to claim 9, **characterized in that** the aggregator (102) sends to the application (103) stand-alone update information and a link to a website together inside a single SMS, the stand-alone information allowing an end-user to decide upon such stand-alone information whether he is interested or not in getting further information by connecting to the website by means of the said link to the website.
